# EUROPEAN PATENT SPECIFICATION

(11) **EP 4 567 567 B1**
(45) Date of publication and mention of the grant of the patent: **14.10.2026**
(21) Application number: 23855129.5
(22) Date of filing: 14.08.2023
(51) Int. Cl.: G06F 3/041, G06F 3/046, H05K 9/00, H05K 5/04, H05K 5/06, H04M 1/02, G06F 1/16

(54) **ELECTRONIC DEVICE COMPRISING DIGITIZER**
ELEKTRONISCHE VORRICHTUNG MIT DIGITALISIERER
DISPOSITIF ÉLECTRONIQUE COMPRENANT UN NUMÉRISEUR

(30) Priority: 17.08.2022 KR 20220102966; 28.09.2022 KR 20220123508
(43) Date of publication of application: 11.06.2025
(73) Proprietor: Samsung Electronics Co., Ltd., Suwon-si, Gyeonggi-do 16677 (KR)
(72) Inventor: PARK, Sangil, Suwon-si, Gyeonggi-do 16677 (KR); LIM, Jaedeok, Suwon-si, Gyeonggi-do 16677 (KR); CHO, Gyuyeong, Suwon-si, Gyeonggi-do 16677 (KR); JUNG, Hyunsuk, Suwon-si, Gyeonggi-do 16677 (KR); KIM, Yongyoun, Suwon-si, Gyeonggi-do 16677 (KR); AN, Jungchul, Suwon-si, Gyeonggi-do 16677 (KR)
(74) Representative: Gulde & Partner
(86) International application number: PCT/KR2023/012049
(87) International publication number: WO 2024/039162

(56) References cited:
- WO-A1-2021/246687
- WO-A1-2022/098082
- KR-A- 20180 122 210
- KR-A- 20220 042 022
- KR-A- 20220 082 957
- US-A1- 2022 238 821

## Description

### [Technical Field]

Various embodiments of the disclosure relate to an electronic device including a digitizer.

### [Background Art]

Due to advancement in information and communication technology and semiconductor technology, various functions are being integrated into a single portable electronic device. For example, an electronic device may implement not only communication functions, but also entertainment functions such as gaming, multimedia functions such as music/video playback, communication and security functions for mobile banking or the like, and functions for schedule management and an electronic wallet function. These electronic devices are being miniaturized to be conveniently carried by users.

As mobile communication service extends into the multimedia service domain, it is necessary to increase the display sizes of electronic devices in order to allow users to fully utilize multimedia services, as well as voice calls and short message services. However, the display sizes of electronic devices may be in a trade-off relationship with the miniaturization of electronic devices.

Prior art is disclosed in WO 2021/246687 A1.

### [Detailed Description of the Invention]

### [Technical Solution]

The present invention is defined by the appended set of claims. Preferred embodiments are defined by the dependent claims. According to an embodiment of the disclosure, an electronic device includes a housing including a first housing and a second housing, a display disposed on the first housing and the second housing, a hinge structure connecting the first housing and the second housing, and a digitizer assembly connected to the display. The digitizer assembly includes a digitizer including a first digitizer disposed within the first housing and a second digitizer disposed within the second housing, a shielding layer including a first shielding layer disposed within the first housing, a second shielding layer disposed within the second housing, and a folding shielding layer disposed between the first shielding layer and the second shielding layer and including multiple metal patterns, a polymer layer configured to support the folding shielding layer, and an adhesive layer including a first adhesive layer connecting the polymer layer to the digitizer and a second adhesive layer connecting the polymer layer to the hinge structure.

According to an embodiment of the disclosure, a portable electronic device may include a housing including a first housing and a second housing, a display including a first display area disposed on the first housing, a second display area disposed on the second housing, and a folding area positioned between the first display area and the second display area, a hinge structure connecting the first housing and the second housing, and a digitizer assembly positioned under the display. The digitizer assembly may include a digitizer including a first digitizer positioned under at least a portion of the first display area and a second digitizer positioned under at least a portion of the second display area, a shielding layer including a first shielding layer positioned under the first digitizer, a second shielding layer positioned under the second housing, and a folding shielding layer positioned between the first shielding layer and the second shielding layer and including multiple metal patterns, a polymer layer positioned under the folding shielding layer, an adhesive layer including a first adhesive layer connecting the polymer layer to the digitizer and a second adhesive layer connecting the polymer layer to the hinge structure, and a metal sheet including a first metal sheet positioned between the first shielding layer and the first housing and a second metal sheet positioned between the second shielding layer and the second housing.

### [Brief Description of Drawings]

FIG. 1 is a block diagram of an electronic device according to an embodiment of the disclosure in a network environment.
FIG. 2 is a view illustrating an electronic device according to an embodiment of the disclosure in an unfolded state.
FIG. 3 is a view illustrating the electronic device according to an embodiment of the disclosure in a folded state.
FIG. 4 is an exploded perspective view of an electronic device according to an embodiment of the disclosure.
FIG. 5 is a schematic side view of an electronic device including a display and digitizer assembly according to an embodiment of the disclosure.
FIG. 6 is a cross-sectional view of an electronic device according to an embodiment of the disclosure.
FIGS. 7A to 7C are views respectively folding shielding layers according to an embodiment of the disclosure.
FIG. 8 is a view illustrating inductance according to an embodiment of the present disclosure.

### [Mode for Carrying out the Invention]

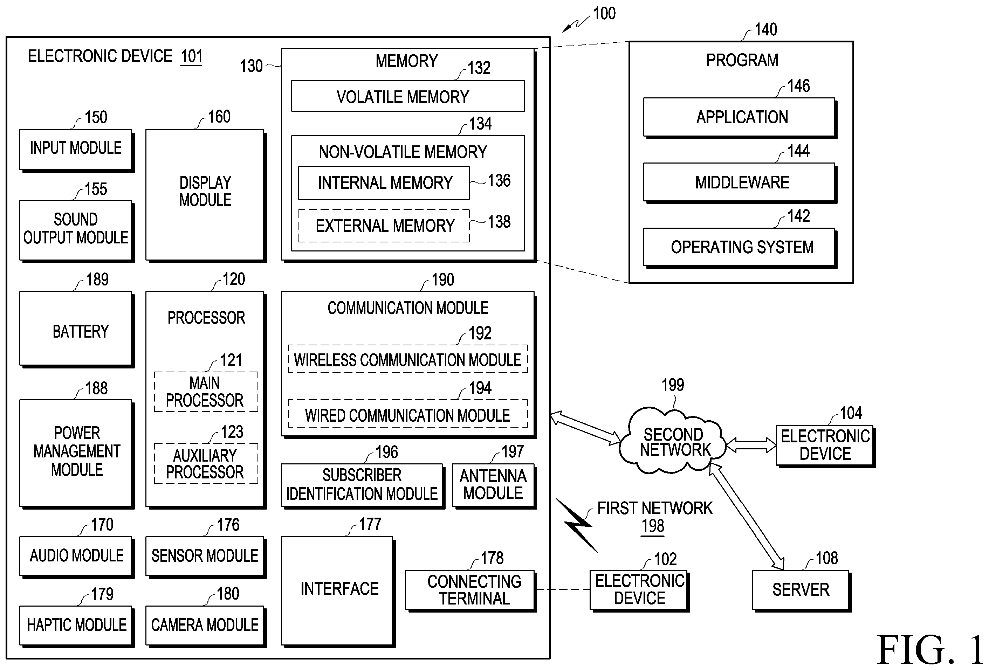

FIG. 1 is a block diagram illustrating an electronic device 101 in a network environment 100 according to an embodiment of the disclosure.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

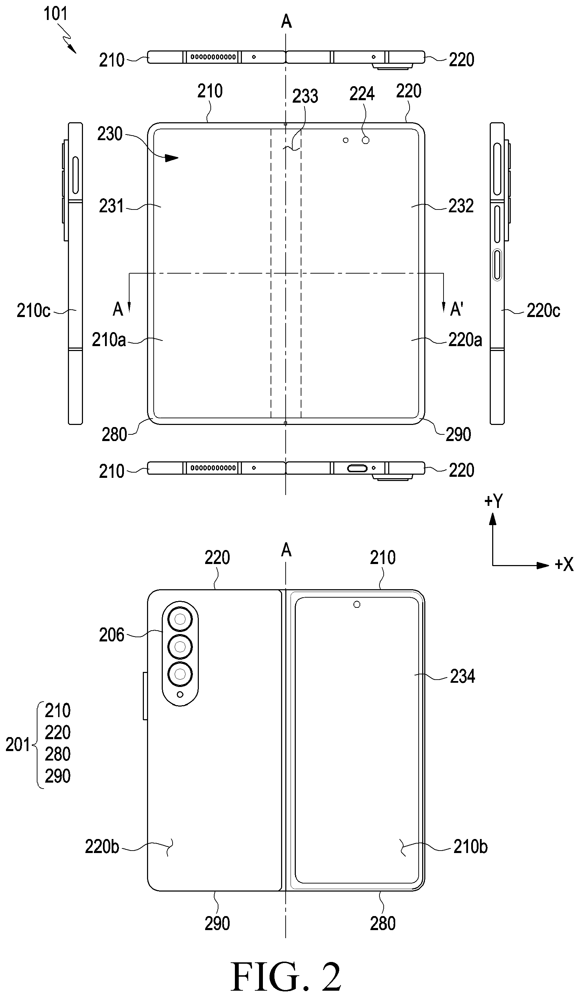

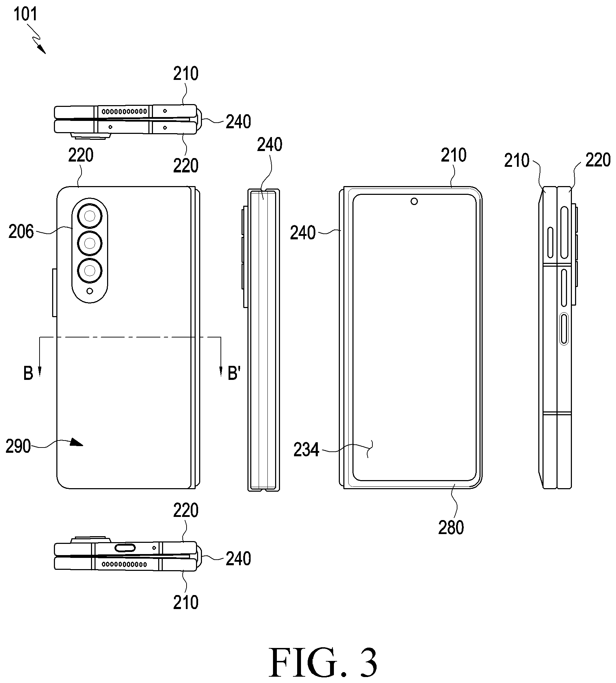

FIG. 2 is a view illustrating an electronic device according to an embodiment of the disclosure in an unfolded state. FIG. 3 is a view illustrating the electronic device according to an embodiment of the disclosure in a folded state.

Referring to FIGS. 2 and 3, an electronic device 101 may include a housing 201, a hinge cover 240 configured to cover a foldable portion of the housing 201, and a display 230 disposed in a space defined by the housing 201. According to an embodiment, the surface on which a screen output from the display 230 is exposed is defined as the front surface of the electronic device 101 (e.g., a first front surface 210a and a second front surface 220a). The surface opposite to the front surface is defined as the rear surface (e.g., a first rear surface 210b and a second rear surface 220b) of the electronic device 101. In addition, a surface surrounding the space between the front and rear surfaces is defined as the side surface (e.g., a first side surface 210c and a second side surface 220c) of the electronic device 101. The side surface of the electronic device 101 may be the side surface of at least one of the first housing 210 or the second housing 220. The electronic device 101 of FIGS. 2 and 3 may be referred to as a "foldable electronic device", a "portable electronic device", or a "portable foldable electronic device". According to an embodiment, the housing 201 may be referred to as a "foldable housing".

According to an embodiment, the housing 201 may include a first housing 210, a second housing 220 rotatable with respect to the first housing 210, a first rear surface cover 280, and a second rear surface cover 290. The housing 201 of the electronic device 101 is not limited to the shape and assembly illustrated in FIGS. 2 and 3, but may be implemented by combinations and/or assemblies of other shapes or components. For example, in an embodiment, the first housing 210 and the first rear surface cover 280 may be integrally configured, and the second housing 220 and the second rear surface cover 290 may be integrally configured.

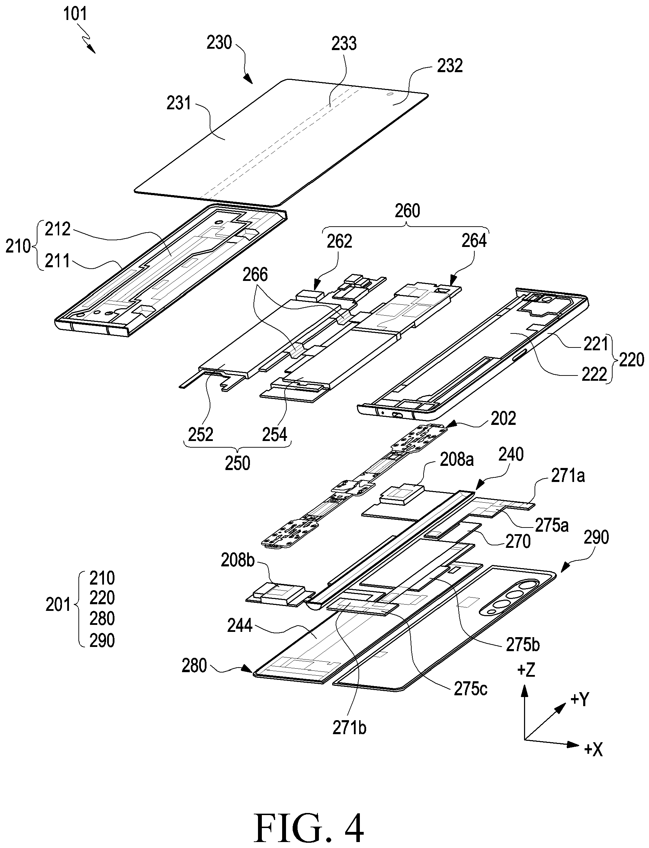

According to an embodiment, the first housing 210 may include a first front surface 210a connected to a hinge structure (e.g., the hinge structure 202 in FIG. 4) and oriented in a first direction, and a first rear surface 210b oriented in a second direction opposite to the first direction. The second housing 220 may include a second front surface 220a connected to the hinge structure 202 and oriented in a third direction, and a second rear surface 220b oriented in a fourth direction opposite to the third direction, and may be rotatable with respect to the first housing 210 around the hinge structure 202. Accordingly, the electronic device 101 may be changed to a folded state or an unfolded state. When the electronic device 101 is in the folded state, the first front surface 210a may face the second front surface 220a, and when the electronic device 101 is in the unfolded state, the third direction may be the same as the first direction. Herein below, unless otherwise stated, directions will be described with reference to the unfolded state of the electronic device 101.

According to an embodiment, the first housing 210 and the second housing 220 may be disposed on opposite sides about the folding axis A and may have generally symmetrical shapes with respect to the folding axis A. As will be described later, the angle or distance between the first housing 210 and the second housing 220 may vary depending on whether the electronic device 101 is in the unfolded state, in the folded state, or in the intermediate state. According to an embodiment, the second housing 220 additionally includes a sensor area 224 where sensors (e.g., a front camera) are disposed, but the second housing 220 may have a mutually symmetrical shape in other areas.

According to an embodiment, the folding axis A may be a plurality of (e.g., two) parallel folding axes. In the disclosure, the folding axis A is provided along the longitudinal direction (the Y-axis direction) of the electronic device 101, but the direction of the folding axis A is not limited thereto. For example (not illustrated), the electronic device 101 may include a folding axis A extending along the width direction (e.g., the X-axis direction).

According to an embodiment, the electronic device 101 may include a structure to which a digital pen can be attached. For example, the electronic device 101 may include a magnetic body configured to attach the digital pen to the side surface of the first housing 210 or the side surface of the second housing 220. According to an embodiment, the electronic device 101 may include a structure into which a digital pen is insertable. For example, a hole (not illustrated) into which the digital pen is insertable may be provided in the side surface of the first housing 210 or the side surface of the second housing 220 of the electronic device 101.

According to an embodiment, the first housing 210 and the second housing 220 may be at least partially made of a metal or non-metal material having rigidity in a level selected in order to support the display 230. The at least a portion made of the metal material may provide a ground plane of the electronic device 101, and may be electrically connected to a ground line provided on a printed circuit board (e.g., the board unit 260 in FIG. 4).

According to an embodiment, the sensor area 224 may be defined to have a predetermined area adjacent to an edge or a corner of the second housing 220. However, the arrangement, shape, and size of the sensor area 224 are not limited to the illustrated example. For example, in other embodiments, the sensor area 224 may be provided at another corner or at any area between the upper and lower end corners in the second housing 220 or in the first housing 210. In an embodiment, components embedded in the electronic device 101 to carry out various functions may be exposed on the front surface of the electronic device 101 through the sensor area 224 or through one or more openings provided in the sensor area 224. In various embodiments, the components may include various types of sensors. The sensors may include, for example, at least one of a front camera, a receiver, or a proximity sensor.

According to an embodiment, the first rear surface cover 280 may be disposed on the rear surface of the electronic device 101 on one side of the folding axis A and may have, for example, a substantially rectangular periphery, which may be surrounded by the first housing 210. Similarly, the second rear surface cover 290 may be arranged on the other side of the folding axis A of the rear surface of the electronic device 101, and the periphery of the second rear surface cover 290 may be enclosed by the second housing 220.

According to an embodiment, the first rear surface cover 280 and the second rear surface cover 290 may have substantially symmetrical shapes about the folding axis (the axis A). However, the first rear surface cover 280 and the second rear surface cover 290 do not necessarily have mutually symmetrical shapes, and in another embodiment, the electronic device 101 may include a first rear surface cover 280 and a second rear surface cover 290 having various shapes.

According to an embodiment, the first rear surface cover 280, the second rear surface cover 290, the first housing 210, and the second housing 220 may define a space in which various components (e.g., a printed circuit board or a battery) of the electronic device 101 may be disposed. According to an embodiment, one or more components may be disposed or visually exposed on the rear surface of the electronic device 101. For example, at least a portion of the sub-display (e.g., the sub-display 244 in FIG. 4) may be visually exposed through at least a portion of the first rear surface cover 280. In another embodiment, one or more components or sensors may be visually exposed through at least a portion of the second rear surface cover 290. In various embodiments, the sensors may include a proximity sensor and/or a camera module 206 (e.g., a rear camera).

According to an embodiment, a front camera exposed to the front surface of the electronic device 101 through one or more openings provided in the sensor area 224 or a camera module 206 exposed through at least a portion of the second rear surface cover 290 may include one or more lenses, an image sensor, and/or an image signal processor. In some embodiments, two or more lenses (e.g., an infrared camera, a wide-angle lens, and a telephoto lens), and image sensors may be arranged on one surface of the electronic device 101.

According to an embodiment, the hinge cover 240 is disposed between the first housing 210 and the second housing 220 and may cover internal components (e.g., the hinge structure 202 in FIG. 4). According to an embodiment, the hinge cover 240 may be covered by a portion of the first housing 210 and a portion of the second housing 220, or may be exposed to the outside depending on the state of the electronic device 101 (the unfolded state (flat state) or the folded state).

According to an embodiment, as illustrated in FIG. 2, when the electronic device 101 is in the unfolded state, the hinge cover 240 may not be exposed by being covered by the first housing 210 and the second housing 220. As another example, as illustrated in FIG. 3, when the electronic device 101 is in the folded state (e.g., the fully folded state), the hinge cover 240 may be exposed to the outside between the first housing 210 and the second housing 220. As another example, when the first housing 210 and the second housing 220 are in the intermediate state in which the first and second housings are folded with a certain angle therebetween, the hinge cover 240 may be partially exposed to the outside between the first housing 210 and the second housing 220. However, in this case, the exposed area may be smaller than that in the fully folded state. According to an embodiment, the hinge cover 240 may include a curved surface.

According to an embodiment, the display 230 may be placed in the space defined by the housing 201. For example, the display 230 may be seated in a recess defined by the housing 201, and may constitute most of the front surface of the electronic device 101. Accordingly, the front surface of the electronic device 101 may include the display 230, and partial areas of the first housing 210 and the second housing 220, which are adjacent to the display 230. The rear surface of the electronic device 101 may include the first rear surface cover 280, a partial area of the first housing 210 adjacent to the first rear surface cover 280, the second rear surface cover 290, and a partial area of the second housing 220 adjacent to the second rear surface cover 290.

According to an embodiment, the display 230 may refer to a display that is at least partially deformable into a planar surface or a curved surface. For example, the display 230 may be a foldable or flexible display. According to an embodiment, the display 230 may include a folding area 233, a first display area 231 disposed on one side of the folding area 233 (e.g., the left side of the folding area 233 illustrated in FIG. 2), and a second display area 232 disposed on the other side of the folding area 233 (e.g., the right side of the folding area 203 illustrated in FIG. 2).

According to an embodiment, the display 230 may include a first display area 231 disposed on the first housing 210, a second display area 232 disposed on the second housing 220, and a folding area 233 positioned between the first display area 231 and the second display area 232. According to an embodiment, the first display area 231 and the second display area 232 may be rotatable about the folding axis A.

However, the area division of the display 230 is illustrative, and the display 230 may be divided into multiple areas (e.g., four or more areas or two areas) depending on the structure or functions thereof. For example, in the embodiment illustrated in FIG. 2, the area of the display 230 may be divided by the folding area 233 or the folding axis (the axis A) extending parallel to the Y axis. However, in another embodiment, the area of the display 230 may be divided based on another folding area (e.g., a folding area parallel to the X axis) or another folding axis (e.g., a folding axis parallel to the X axis). According to an embodiment, the display 230 may be coupled to or disposed adjacent to a touch-sensitive circuit, a pressure sensor that is capable of measuring touch intensity (pressure), and/or a digitizer (not illustrated) configured to detect a magnetic field-type stylus pen.

According to an embodiment, the first display area 231 and the second display area 232 may have generally symmetrical shapes about the folding area 233. According to an embodiment (not illustrated), unlike the first display area 231, the second display area 232 may include a notch cut due to the presence of the sensor area 224, but may have a shape symmetrical to the first display area 231 in areas other than the sensor area. In other words, the first display area 231 and the second display area 232 may include portions having mutually symmetrical shapes and portions having mutually asymmetrical shapes.

Hereinafter, the operations of the first housing 210 and the second housing 220 depending on the states of the electronic device 101 (e.g., a flat or unfolded state and a folded state) and respective areas of the display 230 will be described.

According to an embodiment, when the electronic device 101 is in the unfolded state (the flat state) (e.g., FIG. 2), the first housing 210 and the second housing 220 may be disposed to form an angle of 180 degrees therebetween and to be oriented in the same direction. The surface of the first display area 231 and the surface of the second display area 232 of the display 230 may form 180 degrees therebetween and may oriented in the same direction (e.g., the front direction of the electronic device). The folding area 233 may define the same plane as the first display area 231 and the second display area 232.

According to an embodiment, when the electronic device 101 is in the folded state (e.g., FIG. 3), the first housing 210 and the second housing 220 may be disposed to face each other. The surface of the first display area 231 and the surface of the second display area 232 of the display 230 may face each other while forming a narrow angle (e.g., between 0 degrees and 10 degrees) therebetween. At least a portion of the folding area 233 may be provided as a curved surface with a predetermined curvature.

According to an embodiment, when the electronic device 101 is in the intermediate state (not illustrated), the first housing 210 and the second housing 220 may be disposed to form a certain angle therebetween. The surface of the first display area 231 and the surface of the second display area 232 of the display 230 may form an angle greater than that in the folded state and smaller than that in the unfolded state. At least a portion of the folding area 233 may form a curved surface having a predetermined curvature, and the curvature in this case may be smaller than that in the folded state.

FIG. 4 is an exploded perspective view of an electronic device according to an embodiment of the disclosure.

Referring to FIG. 4, the electronic device 101 may include a housing 201, a display 230, a hinge structure 202, a battery 250, and a board unit 260. The housing 201 may include a first housing 210, a second housing 220, a first rear surface cover 280, and a second rear surface cover 290. The configuration of the first housing 210, the second housing 220, the hinge cover 240, the first rear surface cover 280, and the second rear surface cover 290 of FIG. 4 may be wholly or partly the same as the configuration of the first housing 210, the second housing 220, the hinge cover 240, the first rear surface cover 280, and the second rear surface cover 290 in FIG. 2 and/or FIG. 3.

According to an embodiment, the first housing 210 and the second housing 220 may be assembled to each other to be coupled to opposite sides of the hinge structure 202. According to an embodiment, the first housing 210 may include a first support area 212 capable of supporting components (e.g., the first circuit board 262 and/or the first battery 252) of the electronic device 101 and a first side wall 211 surrounding at least a portion of the first support area 212. The first side wall 211 may include a first side surface (e.g., the first side surface 210c in FIG. 2) of the electronic device 101. According to an embodiment, the second housing 220 may include a second support area 222 capable of supporting components (e.g., the second circuit board 264 and/or the second battery 254) of the electronic device 101 and a second side wall 221 surrounding at least a portion of the second support area 222. The second side wall 221 may include a second side surface (e.g., the second side surface 220c in FIG. 2) of the electronic device 101.

According to an embodiment, the display 230 may include a first display area 231, a second display area 232, a folding area 233, and a sub-display 244. The configuration of the first display area 231, the second display area 232, and the folding area 233 in FIG. 3 may be wholly or partly the same as or similar to the configuration of the first display area 231, the second display area 232, and the folding area 233 in FIG. 1 and/or FIG. 2.

According to an embodiment, the sub-display 244 may display a screen in a different direction from the display areas 231 and 232. For example, the sub-display 234 may output a screen in a direction opposite to the first display area 231. According to an embodiment, the sub-display 234 may be disposed on the first rear surface cover 280.

According to an embodiment, the battery 250 may include a first battery 252 disposed in the first housing 210 and a second battery 254 disposed in the second housing 220. According to an embodiment, the first battery 252 may be connected to a first circuit board 262, and the second battery 254 may be connected to a second circuit board 264. According to an embodiment, the battery 250 may supply power to at least one component of the electronic device 101. According to an embodiment, the battery 250 may include, for example, a non-rechargeable primary cell, a rechargeable secondary cell, or a fuel cell.

According to an embodiment, the board unit 260 may include the first circuit board 262 disposed within the first housing 210 and the second circuit board 264 disposed within the second housing 220. According to an embodiment, the first circuit board 262 and the second circuit board 264 may be electrically connected to each other by at least one flexible circuit board 266. According to an embodiment, at least a portion of flexible circuit board 266 may be disposed across hinge structure 202. According to an embodiment, the first circuit board 262 and the second circuit board 264 may be disposed inside a space defined by the first housing 210, the second housing 220, the first rear surface cover 280, and the second rear surface cover 290. Components for implementing various functions of the electronic device 101 may be mounted on the first circuit board 262 and the second circuit board 264.

According to an embodiment, the electronic device 101 may include speakers 208a and 208b. According to an embodiment, the speakers 208a and 2008b may convert electrical signals into sound. According to an embodiment, the speakers 208a and 208b may be disposed inside the space defined by the first housing 210, the second housing 220, the first rear surface cover 280, and the second rear surface cover 290. According to an embodiment, the speakers 208a and 208b may include an upper speaker 208a located in an upper portion (the +Y direction) of the electronic device 101 and a lower speaker 208b located in the lower portion (the -Y direction) of the electronic device 101. In the disclosure, the speakers 208a and 208b are illustrated as being located within one housing (e.g., the first housing 210 in FIG. 4), but this is an optional structure. For example, the speakers 208a and 208b may be located within at least one of the first housing 210 or the second housing 220. The configuration of the speakers 208a and 208b in FIG. 4 may be wholly or partly the same as the configuration of the sound output module 155 in FIG. 1.

According to an embodiment, the electronic device 101 may include a rear member 270 (or a rear case). According to an embodiment, the rear member 270 may be disposed within the housing 201 (e.g., the second housing 220). According to an embodiment, the rear member 270 may accommodate at least one antenna 275.

According to an embodiment, the electronic device 101 may include an antenna 275. The antennas 275a and 275b may include, for example, an ultrawide band (UWB) antenna 275a, a near field communication (NFC) antenna, a wireless charging antenna, and/or a magnetic secure transmission (MST) antenna 275b. For example, the antenna 275 may execute short-range communication with an external device or may transmit/receive power required for charging to/from an external device in a wireless manner.

In an embodiment, an antenna structure may be provided by portions of the housing 201 or a combination thereof. For example, the antenna 275 may include a communication antenna 275c that is at least partially exposed to the outside of the electronic device 101 and defines at least a portion of the outside of the electronic device 101. The communication antenna 275c may be used for communication (e.g., Wi-Fi) with an external electronic device. The communication antenna 275c may be connected to an upper portion 271a or a lower portion 271b of the rear member 270.

In the following detailed description, a pair of housings may be exemplified with respect to a configuration in which the housings are rotatably coupled to each other by a hinge structure. It is noted that an electronic device according to various embodiments disclosed herein is not limited by the embodiments. For example, an electronic device according to various embodiments disclosed herein may include three or more housings, and the "a pair of housings" in the embodiments disclosed below may mean "two housings rotatably coupled to each other among three or more housings".

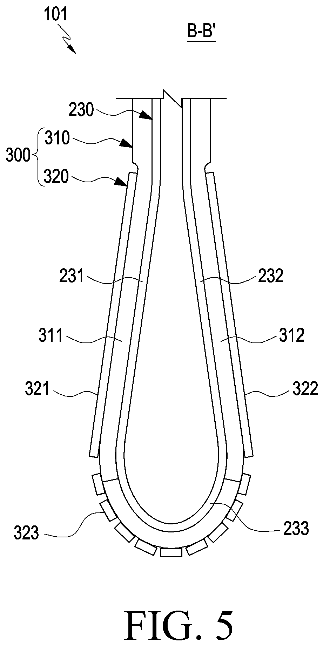

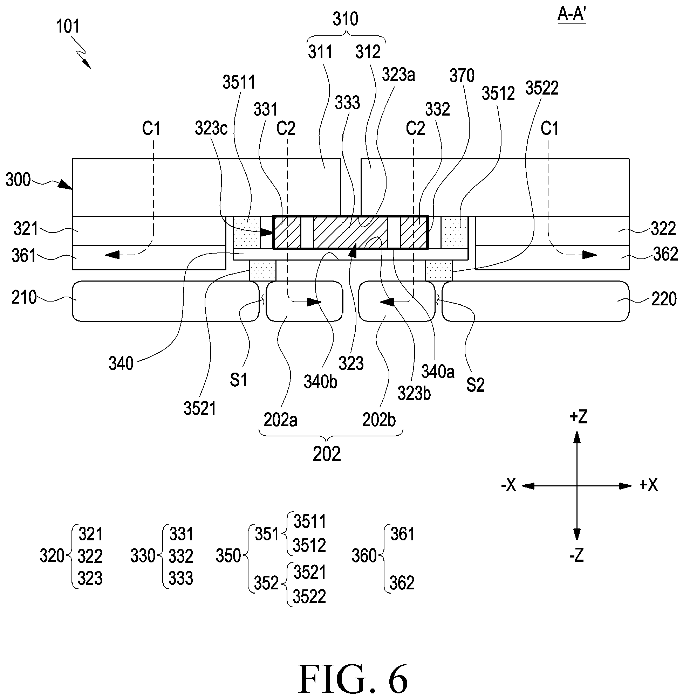

FIG. 5 is a schematic side view of an electronic device including a display and digitizer assembly according to an embodiment of the disclosure. FIG. 6 is a cross-sectional view of an electronic device according to an embodiment of the disclosure. For example, FIG. 5 is a cross-sectional view taken along line B-B' in FIG. 3. FIG. 6 is a cross-sectional view taken along line A-A' in FIG. 2. For convenience of description, some of the components of the electronic device 101 of FIGS. 2 and 3 are omitted in the electronic device 101 illustrated in FIGS. 5 and 6.

Referring to FIG. 5 and/or FIG. 6, the electronic device 101 may include a hinge structure 202, a display 230, and a digitizer assembly 300. The configurations of the hinge structure 202 and the display 230 of FIG. 5 and/or FIG. 6 may be wholly or partially the same as the those of the hinge structure 202 and the display 230 of FIG. 4. For example, the display 230 may include a first display area 231, a second display area 232, and a folding area 233.

According to an embodiment, the first housing 210 and the second housing 220 may support a digitizer assembly 300. For example, the first digitizer 311, the first shielding layer 321, and the first metal sheet 361 may be disposed on the first housing 210. The second digitizer 312, the second shielding layer 322, and the second metal sheet 362 may be disposed on the second housing 220. According to an embodiment, the configuration of the first housing 210 of FIG. 6 may be substantially the same as that of the first support area 212 of FIG. 4, and the configuration of the second housing 220 of FIG. 6 may be substantially the same as that of the second support area 222 of FIG. 4.

According to an embodiment, the hinge structure 202 may connect the first housing 210 and the second housing 220. For example, the hinge structure 202 may include a first plate 202a connected to the first housing 210 and a second plate 202b connected to the second housing 220. The first plate 202a may be referred to as a first wing plate, and the second plate 202b may be referred to as a second wing plate. According to an embodiment, the hinge structure 202 may support a portion of the display assembly 300. For example, the polymer layer 340 may be disposed on the first plate 202a and the second plate 202b using a second adhesive layer 352. According to an embodiment, the hinge structure 202 may be referred to as a spiral hinge. The hinge structure 202 may be a structure for interlocking the rotations of the first housing 210 and the second housing 220. For example, the hinge structure 202 may be a structure for rotating the second housing 220 by an angle substantially equal to the angle by which the first housing 210 is rotated. According to an embodiment, the structure of the hinge structure 202 is optional. For example, in an embodiment, the hinge structure 202 may include a central plate (not illustrated) positioned between the first plate 202a and the second plate 202b and accommodating at least a portion of the first plate 202a and the second plate 202b.

According to an embodiment, the display 230 may be coupled to or positioned adjacent to the digitizer assembly 300. For example, the display 230 may be disposed on the digitizer 310 of the digitizer assembly 300. According to an embodiment, the first display area 231 may be disposed on at least a portion of the first digitizer 311. The second display area 232 may be disposed on at least a portion of the second digitizer 312. According to an embodiment, the folding area 233 may be positioned on the folding shielding layer 323 of the digitizer assembly 300.

According to an embodiment, the digitizer assembly 300 may include a digitizer 310. The digitizer 310 may be a panel for detecting input from a digital pen (e.g., an electromagnetic inductor). The digitizer 310 may be referred to as an electromagnetic induction panel. The digital pen may provide an input to the electronic device 101 using an electro-magnetic resonance (EMR), active electrical stylus (AES), or electric coupled resonance (ECR) method. The digital pen may be referred to as a stylus. For example, the digitizer 310 may include a circuit board (e.g., a printed circuit board or a flexible printed circuit board) and a plurality of coils positioned within the circuit board. The plurality of coils may generate a magnetic field. The digital pen may resonate based on a magnetic field generated from the digitizer, and the magnetic field may be formed in the coil of the digital pen by resonance. A current may be output from the coils of the digitizer 310 by the magnetic field formed from the digital pen. The electronic device 101 may identify (or detect) the position of the digital pen based on the magnitude of the current (e.g., converted digital values) per channel output from multiple coils of the digitizer 310. According to an embodiment, the digitizer 310 may include a pattern layer on which a transmission pattern is formed and a pattern layer on which a reception pattern is formed. The transmission pattern and the reception pattern layers may be mutually laminated to generate or detect an electromagnetic field. The electronic device 101 may detect a magnetic field generated from the digital pen through the EMR method using the digitizer 310 and may detect various motions such as approaching, clicking, or dragging of the digital pen.

According to embodiment, the digitizer 310 may include multiple spaced digitizers 311 and 312. For example, the digitizer 310 may include a first digitizer 311 disposed on the first housing 210 and a second digitizer 312 disposed on the second housing 220. At least a portion of the first digitizer 311 may be positioned under the first display area 231. At least a portion of the second digitizer 312 may be positioned under the second display area 232. According to an embodiment, the first digitizer 311 may be spaced from the second digitizer 312.

According to an embodiment, the digitizer assembly 300 may include a shielding layer 320 to reduce electromagnetic interference of the digitizer 310. According to an embodiment, the shielding layer 320 may include magnetic metal powder. For example, the shielding layer 320 may be referred to as a layer of magnetic metal powder applied under the digitizer 310. The shielding layer 320 may reduce the magnitude of the magnetic field transmitted from an electronic component positioned within the first housing 210 or the second housing 220 to the digitizer 310 in addition to the signal input from the digital pen. By reducing the magnetic field of the electronic component, which is positioned within the electronic device 101, to be transmitted to the digitizer 310, the noise of the digitizer 310 may be reduced.

According to an embodiment, at least a portion of the shielding layer 320 may be bendable. For example, the shielding layer 320 may be bendable based on relative movement (e.g., unfolding or folding) of the first housing 210 relative to the second housing 220. According to an embodiment, the shielding layer 320 may be referred to as a shielding structure or shielding member. The shielding layer 320 may include a first shielding layer 321 disposed within the first housing 210, a second shielding layer 322 disposed within the second housing 220, and a folding shielding layer 323 positioned between the first shielding layer 321 and the second shielding layer 322. The folding shielding layer 323 may be referred to as a shielding member, a shielding structure, a foldable shielding layer, a flexible shielding layer, or a stretchable shielding layer. The first shielding layer 321 may be referred to as a first shielding member or a first shielding structure. The second shielding layer 322 may be referred to as a second shielding member or a second shielding structure.

According to an embodiment, the folding shielding layer 323 may include multiple metal patterns 330. The multiple metal patterns 330 may be spaced apart from each other. Since the multiple metal patterns 330 are spaced apart from each other, the flexibility of the folding shielding layer 323 may be greater than the flexibility of the first shielding layer 321 or the flexibility of the second shielding layer 322. The metal patterns 330 may be portions of the folding shielding layer 323 divided by slits, through holes, recesses, or grooves formed in the folding shielding layer 323.

According to an embodiment, the metal patterns 330 may include a first pattern 331 at least partially positioned under the first digitizer 311, a second pattern 332 at least partially positioned under the second digitizer 312, and a central pattern 333 positioned between the first pattern 332 and the second pattern 333. The first pattern 331 may be positioned between the first shielding layer 321 and the central pattern 333. The second pattern 332 may be positioned between the second shielding layer 322 and the central pattern 333.

According to an embodiment, the pattern arrangement of the multiple metal patterns 330 may vary. For example, a structure in which the multiple metal patterns 330 are arranged may be formed to correspond to the structure of the electronic device 101.

According to an embodiment, the size of the central pattern 333 may be larger than the size of the first pattern 331 or the size of the second pattern 332. Since the central pattern 333 is formed to be larger than the first pattern 331 or the second pattern 332, wear of the polymer layer 340 may be reduced when the electronic device 101 is folded.

According to an embodiment, the thickness of the shielding layer 320 may be substantially uniform. For example, the thickness of the central pattern 333 may be substantially the same as the thickness of the first pattern 331 and the thickness of the second pattern 332.

In one embodiment, the display assembly 300 may include the polymer layer 340. The polymer layer 340 may support a portion of the shielding layer 320 (e.g., the folding shielding layer 323). For example, the folding shielding layer 323 may be connected to the hinge structure 202 using the polymer layer 340. At least a portion of the polymer layer 340 may be surrounded by the digitizer 310, the shielding layer 320, and the metal sheet 360. The polymer layer 340 may be positioned under the multiple metal patterns 330. The polymer layer 340 may be positioned between the first shielding layer 321 and the second shielding layer 322. The polymer layer 340 may be positioned between the first metal sheet 361 and the second metal sheet 362. According to an embodiment, the polymer layer 340 may be referred to as an elastomer, an elastic structure, an elastic member, a polymer structure, or a polymer member.

According to an embodiment, the polymer layer 340 may be made of an elastic material. According to an embodiment, the polymer layer 340 may include polyurethane PU. For example, the polymer layer 340 may include thermoplastic polyurethane (TPU) and/or elastic polyurethane (EPU). The material of the polymer layer (340) may be optional. For example, the polymer layer 340 may include other elastic materials other than polyurethane.

According to an embodiment, the display assembly 300 may include an adhesive layer 350 for bonding or connecting components of the digitizer assembly 300. The adhesive layer 350 may include at least one of an optical clear adhesive (OCA), a pressure-sensitive adhesive (PSA), a heat-responsive adhesive, a general adhesive, or double-sided tape. According to an embodiment, the adhesive layer 350 may be referred to as an adhesive member or an adhesive. For example, the first adhesive layer 351 may be referred to as a first adhesive member or a first adhesive. The second adhesive layer 352 may be referred to as a second adhesive member or a second adhesive.

According to an embodiment, the adhesive layer 350 may include a first adhesive layer 351 for connecting the polymer layer 340 to the digitizer 310. The first adhesive layer 351 may be positioned between the top surface 340a of the polymer layer 340 and the digitizer 310. The first adhesive layer 351 may include a (1-1)^{th} adhesive layer 3511 connecting the polymer layer 340 and the first digitizer 311 and a (1-2)^{th} adhesive layer 3512 connecting the polymer layer 340 and the second digitizer 312.

According to an embodiment, the adhesive layer 350 may include a second adhesive layer 352 for connecting the polymer layer 340 to the hinge structure 202. The second adhesive layer 352 may be positioned between the bottom surface 340b of the polymer layer 340 and the hinge structure 202. The second adhesive layer 352 may include a (2-1)^{th} adhesive layer 3521 connecting the polymer layer 340 and the first plate 202a and a (2-2)^{th} adhesive layer 3522 connecting the polymer layer 340 and the second plate 202b.

According to an embodiment, the display assembly 300 may include a metal sheet 360 to provide uniform inductance. For example, the metal sheet 360 may include a metal (e.g., copper) and may reduce the destructive interference due to eddy currents. For example, the metal sheet 360 may reduce the eddy currents generated in the digitizer 310 by allowing at least a portion of the magnetic field passing through the digitizer 310 and the shielding layer 320 to flow inside the metal sheet 360. According to an embodiment, some of the eddy currents (e.g., a first eddy current c1) may be transmitted through the first shielding layer 321 or the second shielding layer 322 to the metal sheet 360. Some of the eddy currents (e.g., a second eddy current c2) may be transmitted through the folding shielding layer 323 to the hinge structure 202.

According to an embodiment, the metal sheet 360 may support the digitizer 310 and/or the shielding layer 320. For example, the metal sheet 360 may be disposed under the shielding layer sheet 320 (in the -Z-axis direction).

According to an embodiment, the metal sheet 360 may include a first metal sheet 361 positioned between the first shielding layer 321 and the first housing 210 and a second metal sheet 362 positioned between the second shielding layer 322 and the second housing 220. According to an embodiment, the metal sheet 360 may be referred to as a support sheet or a support plate.

According to an embodiment, the permeability of the shielding layer 320 in the portion that overlaps metal (e.g., the metal sheet 360, the first housing 210, the second housing 220, or the hinge structure 202) may be different from the permeability of the shielding layer 320 in the portion that does not overlap the metal. For example, the electronic device 101 may include a first space S1 positioned between the first housing 210 and the first plate 202a and a second space S2 positioned between the second housing 220 and the second plate 202b. The first space S1 and the second space S2 may be empty spaces where no metal is positioned.

According to an embodiment, at least a portion of the folding shielding layer 323 may cover at least a portion of the first space S1 and at least a portion of the second space S2. The permeability of the shielding layer (e.g., the first shielding layer 321) positioned above the first housing 210 and/or the first metal sheet 361 (in the +Z-axis direction) and the permeability of the second shielding layer 322 positioned above the second housing 220 and/or the second metal sheet 362 (in the +Z-axis direction) may be lower than the permeability of the shielding layer (e.g., the folding shielding layer 323) positioned above the first space S1 or the second space S2 (in the +Z-axis direction). Since the shielding layer 320 has different permeabilities from portion to portion, the difference in inductance depending on a position inside the electronic device 101 may be reduced. By reducing the difference in inductance, the performance of the digitizer 310 may be improved. For example, the accuracy of position determination of an external input device using the digitizer 310 may be improved.

According to an embodiment, the permeability of a portion of the shielding layer 320 that does not overlap the metal sheet 360 (e.g., the folding shielding layer 323) may be lower than the permeability of a portion of the shielding layer 320 that overlaps the metal sheet 360 (e.g., the first shielding layer 321 and the second shielding layer 322). For example, since the folding shielding layer 323 has multiple metal patterns 330, the permeability of the folding shielding layer 323 may be lower than the permeability of the first shielding layer 321 or the second shielding layer 322 that has a substantially uniform shape.

According to one embodiment, the digitizer assembly 300 may include a waterproof coating 370. The waterproof coating 370 may prevent corrosion of the shielding layer 320 by liquid that flows into the electronic device 101. According to an embodiment, the waterproof coating 370 may surround at least a portion of a non-waterproof area of the shielding layer 320 (e.g., the folding shielding layer 323). For example, the waterproof coating 370 may be applied to at least a portion of the top surface 323a, the bottom surface 323b, or the side surface 323c of the folding shielding layer 323. The top surface 323a of the folding shielding layer 323 may be the top surface of at least a portion of the first pattern 331, the second pattern 332, or the central pattern 333. The bottom surface 323b of the folding shielding layer 323 may be the bottom surface of at least a portion of the first pattern 331, the second pattern 332, or the central pattern 333. The side surface 323c of the folding shielding layer 323 may be the side surface of at least a portion of the first pattern 331, the second pattern 332, or the central pattern 333. According to an embodiment, the waterproof coating 370 may be a resin material (e.g., polyethylene terephthalate (PET)). The waterproof coating 370 may be referred to as a waterproof coating layer.

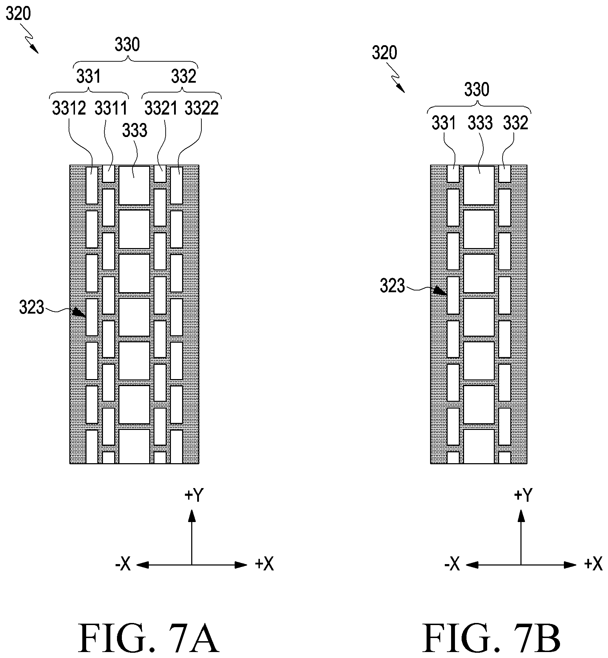

FIGS. 7A to FIG. 7C are views respectively folding shielding layers according to an embodiment of the disclosure.

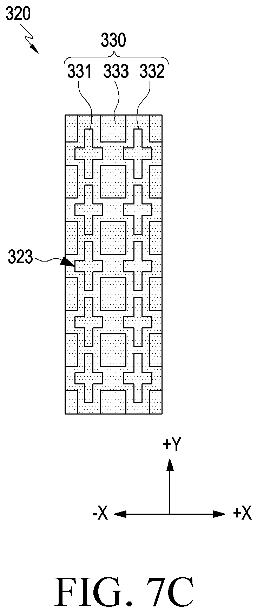

Referring to FIGS. 7A to 7C, the shielding layer 320 may include multiple metal patterns 330. The configurations of the shielding layer 320 and the metal pattern 330 of FIG. 7A, FIG. 7B, and/or FIG. 7C may be wholly or partially the same as those of the shielding layer 320 and the metal pattern 330 of FIG. 6.

According to an embodiment (e.g., FIG. 7A), the folding shielding layer 323 may include multiple metal patterns 331, 332, and 333 which are spaced apart from each other. For example, the folding shielding layer 323 may include a first pattern 331 and a second pattern 332 which are spaced apart from each other, and a central pattern 333 positioned between the first pattern 331 and the second pattern 332. According to an embodiment, the first pattern 331, the second pattern 332, and the central pattern 333 may be arranged substantially parallel to each other. For example, the first pattern 331, the second pattern 332, and the central pattern 333 may each include multiple patterns arranged along the length direction of the electronic device 101 (e.g., the Y-axis direction). The central pattern 333 may be referred to as a third pattern.

According to an embodiment, the number of folding shielding layers 323 may be selected in various ways. For example, referring to FIG. 7A or FIG. 7C, the folding shielding layer 323 may include metal patterns 330 arranged along three parallel lines. For example, the multiple metal patterns 330 may include multiple first patterns 331 arranged along the length direction of the electronic device 101 (e.g., the Y-axis direction), multiple second patterns 332 arranged substantially parallel to the multiple first patterns 331, and multiple central patterns 333 arranged substantially parallel to the multiple first patterns 331 and the multiple second patterns 332. Referring to FIG. 7B, the folding shielding layer 323 may include metal patterns 330 arranged along five parallel lines. For example, the first pattern 331 may include multiple (1-1)^{th} patterns 3311 arranged along the length direction of the electronic device 101 and (1-2)^{th} patterns 3312 arranged substantially parallel to the multiple (1-1)^{th} patterns 3311. The (1-1)^{th} patterns 3311 may be positioned between the (1-2)^{th} patterns 3312 and the central pattern 333. The second pattern 332 may include multiple (2-1)^{th} patterns 3321 arranged along the length direction of the electronic device 101 and (2-2)^{th} patterns 3322 arranged substantially parallel to the multiple (2-1)^{th} patterns 3321. The (2-1)^{th} patterns 3321 may be positioned between the (2-2)^{th} patterns 3322 and the central pattern 333.

The number of folding shielding layers 323 is optional. For example, the number of multiple metal patterns 330 of the folding shielding layer 320 may vary depending on the design of the electronic device 101.

According to an embodiment, the folding shielding layer 323 may include metal patterns 330 having various shapes. For example, referring to FIGS. 7A and 7B, the first patterns 331, the second patterns 332, and the central pattern 333 may have substantially rectangular shapes. According to an embodiment (e.g., FIG. 7C), the central pattern 333 may have a substantially rectangular shape, and the first pattern 331 and the second pattern 332 may have a substantially cross shape. The shape of the folding shielding layer 323 of the shielding layer 320 is optional. For example, the shapes of the multiple metal patterns 330 of the folding shielding layer 323 may be variously changed depending on the design.

According to an embodiment, the shielding layer 320 may have different permeabilities from portion to portion. For example, the permeability of the shielding layer 320 may be designed based on the type of the component positioned above or below the shielding layer 320.

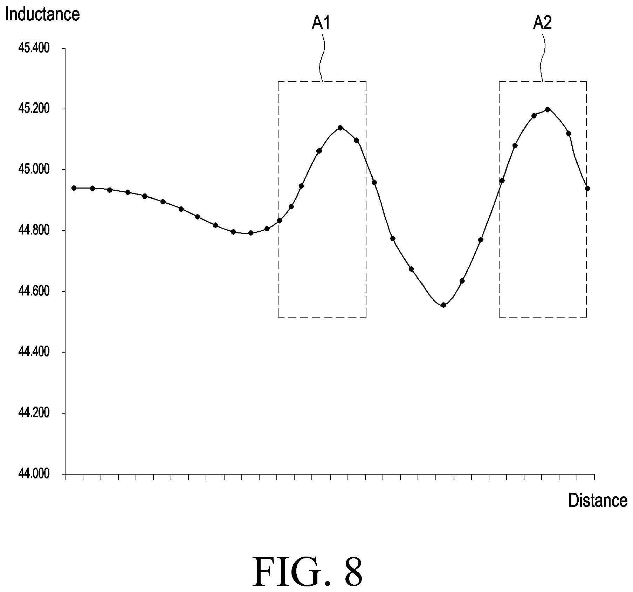

According to an embodiment, the permeabilities of the folding shielding layer 323 may be different from portion to portion. For example, the central pattern 333 may have a first permeability. The first pattern 331 may have a second permeability lower than the first permeability. The second pattern 332 may have a third permeability lower than the first permeability. In an embodiment (e.g., FIG. 8B), the central pattern 333 of the shielding layer 320 may have a permeability of about 100 H/m. The (1-1)^{th} pattern 3311 and the (1-2)^{th} pattern 3321 may have a permeability of about 80 H/m. The (1-2)^{th} pattern 3312 and the (1-2)^{th} pattern 3321 may have a permeability of about 50 H/m. The permeability of the folding shielding layer 323 may be optionally changed.

FIG. 8 is a view illustrating inductance according to an embodiment of the present disclosure.

Referring to FIG. 8 along with FIG. 6, the inductance of the electronic device 101 may vary depending on a position on the electronic device 101. The Y-axis of FIG. 8 may represent inductance, and the X-axis may represent the position on the electronic device 101. For example,

FIG. 8 may represent inductance generated in the electronic device 101 when moving from the left side (e.g., the -X direction in FIG. 6) to the right side (e.g., the +X direction of FIG. 6) of the electronic device 101 on the metal sheet 360 in FIG. 6.

According to an embodiment, the inductance of the digitizer 310 may vary based on a component positioned under the shielding layer 320. For example, depending on the position on the electronic device 101, the magnetic permeability of a component present at each position may vary. The housing (e.g., the first housing 210 and/or the second housing 220 of FIG. 6) may include stainless steel, and the metal sheet (e.g., the metal sheet 360 in FIG. 6) may include copper. The inductance may vary from portion to portion of the electronic device 101.

According to an embodiment, the shielding layer 320 may have different permeabilities from portion to portion. Since the shielding layer 320 has different permeabilities from portion to portion, the magnitude of the overall permeability range of the electronic device 101 may be reduced. As the magnitude of the permeability range of the electronic device 101 is reduced, the difference in inductance is reduced, and the performance of the digitizer (e.g., the digitizer 310 in FIG. 6) may be improved.

According to an embodiment, the inductance at a position where the metal sheet 360 is not present (e.g., a position corresponding to the first space S1 in FIG. 6 (e.g., the first area A1) and a position corresponding to the second space S2 (e.g., the second area A2) may be higher than the inductance at a point positioned above the metal sheet 360. The folding shielding layer 323 may include multiple divided metal patterns 330 to reduce the inductance of the first area A1 and the second area A2. Due to the multiple divided metal patterns 330, the inductance of the electronic device 101 may be provided uniformly.

The electronic device may detect a magnetic field generated by an input device (e.g., a stylus pen) using a digitizer to recognize the coordinates of the input device. An electronic device using a digitizer may include a shielding member to reduce noise. However, since the shielding member is made of metal, it may be difficult to apply an integrated shielding member to a foldable electronic device. Therefore, the shielding member may be provided as separate shielding members connected to respective housings. However, since the separate shielding members open when the electronic device is folded, the inner space of the electronic device may be used inefficiently.

According to an embodiment, it may be possible to provide an electronic device that is capable of efficiently using the mounting space of the electronic device while reducing noise by using a folding shielding layer including multiple separate metal patterns.

The problems that the disclosure seeks to solve are not limited to the aforementioned problems, and may be expanded in various ways without departing from the and scope of the disclosure as defined by the appended set of claims.

According to the disclosure, an electronic device (e.g., the electronic device 101 in FIG. 2) includes a housing (e.g., the housing 201 in FIG. 2) including a first housing (e.g., the first housing 210 in FIG. 2) and a second housing (e.g., the second housing 220 in FIG. 2), a display (e.g., the display 230 in FIG. 2) disposed on the first housing and the second housing, a hinge structure (e.g., the hinge structure 202 in FIG. 4) connecting the first housing and the second housing, and a digitizer assembly (e.g., the digitizer assembly 300 in FIG. 6) connected to the display. The digitizer assembly includes a digitizer (e.g., the digitizer 310 in FIG. 6) including a first digitizer (e.g., the first digitizer 311 in FIG. 6) disposed within the first housing and a second digitizer (e.g., the second digitizer 312 in FIG. 6) disposed within the second housing, a shielding layer (e.g., the shielding layer 320 in FIG. 6) including a first shielding layer (e.g., the first shielding layer 321 in FIG. 6) disposed within the first housing, a second shielding layer (e.g., the second shielding layer 322 in FIG. 6) disposed within the second housing, and a folding shielding layer (e.g., the folding shielding layer 323 in FIG. 6) disposed between the first shielding layer and the second shielding layer and including multiple metal patterns (e.g., the metal patterns 330 in FIG. 6), a polymer layer (e.g., the polymer layer 340 in FIG. 6) configured to support the folding shielding layer, and an adhesive layer (e.g., the adhesive layer 350 in FIG. 6) including a first adhesive layer (e.g., the first adhesive layer 351 in FIG. 6) connecting the polymer layer to the digitizer and a second adhesive layer (e.g., the second adhesive layer 352 in FIG. 6) connecting the polymer layer to the hinge structure. According to an embodiment, the folding shielding layer 323 includes multiple metal patterns, thereby increasing the flexibility of the folding shielding layer. Since the folding shielding layer is bendable, the inner arrangement space of the electronic device may be efficiently used.

According to an embodiment, the digitizer assembly may include a metal sheet 360 including a first metal sheet (e.g., the first metal sheet 361 in FIG. 6) configured to support the first shielding layer and a second metal sheet (e.g., the second metal sheet 362 in FIG. 6) configured to support the second shielding layer.

According to an embodiment, the first metal sheet may be disposed between the first shielding layer and the first housing, and the second metal sheet is disposed between the second shielding layer and the second housing. At least a portion of the polymer layer and at least a portion of the adhesive layer may be disposed between the first metal sheet and the second metal sheet.

According to an embodiment, the metal sheet may include copper. the first housing and the second housing may include stainless steel or aluminum.

According to an embodiment, the multiple spaced metal patterns may include a central pattern (e.g., the central pattern 333 in FIG. 6), a first pattern (e.g., the first pattern 331 of FIG. 6) at least partially disposed between the central pattern and the first shielding layer, and a second pattern (e.g., the second pattern 332 in FIG. 6) at least partially disposed between the central pattern and the second shielding layer.

According to an embodiment, the central pattern may have a first permeability, the first pattern may have a second permeability lower than the first permeability, and the second pattern may have a third permeability lower than the first permeability. By having different permeabilities depending on portions of the multiple metal patterns, the performance of the digitizer may be improved.

According to an embodiment, the first pattern, the second pattern, and the central pattern may be arranged parallel to each other.

According to an embodiment, the first adhesive layer may include a (1-1)^{th} adhesive layer (e.g., the (1-1)^{th} adhesive layer 3511 in FIG. 6) disposed between the first shielding layer and the folding shielding layer, and a (1-2)^{th} adhesive layer (e.g., the (1-2)^{th} adhesive layer 3512 in FIG. 6) disposed between the second shielding layer and the folding shielding layer.

According to an embodiment, the hinge structure may include a first plate 202a connected to the first housing and a second plate 202b connected to the second housing. The second adhesive layer may include a (2-1)^{th} adhesive layer 3521 connected to the first plate and a (2-2)^{th} adhesive layer 3522 connected to the second plate.

According to an embodiment, at least a portion of the folding shielding layer may be configured to cover at least a portion of a first space (e.g., the first space S1 in FIG. 6) disposed between the first plate and the first housing, and at least a portion of a second space (e.g., the second space S2 in FIG. 6) disposed between the second plate and the second housing.

According to an embodiment, the folding shielding layer may have a permeability lower than the permeability of the first shielding layer or the permeability of the second shielding layer. The performance of the digitizer may be improved since the permeability of the folding shielding that does not overlap the metal sheet is lower than that of the first shielding layer or the second shielding layer covering the metal sheet.

According to an embodiment, the display may include a first display area (e.g., the first display area 231 in FIG. 2) disposed on the first housing, a second display area (e.g., the second display area 232 in FIG. 2) disposed on the second housing, and a folding area (e.g., the folding area 233 in FIG. 2) disposed between the first display area and the second display area.

According to an embodiment, the folding shielding layer may face at least a portion of the folding area. Since the folding shielding layer including the multiple metal patterns face the folding area, the foldability of the electronic device may be improved.

According to an embodiment, the shielding layer may include metal magnetic powder.

According to an embodiment, the digitizer assembly may include a waterproof coating (e.g., the waterproof coating 370 in FIG. 6) surrounding at least a portion of the folding shielding layer. Corrosion of the shielding layer 320 may be prevented due to the waterproof coating 370.

According to an embodiment of the disclosure, a portable electronic device (e.g., the electronic device 101 in FIG. 2) may include a housing (e.g., the housing 201 in FIG. 2) including a first housing (e.g., the first housing 210 in FIG. 2) and a second housing (e.g., the second housing 220 in FIG. 2), a display (e.g., the display 230 in FIG. 2) including a first display area (e.g., the first display area 231 in FIG. 2) disposed on the first housing, a second display area (e.g., the second display area 232 in FIG. 2) disposed on the second housing, and a folding area (e.g., the folding area 233 in FIG. 2) positioned between the first display area and the second display area, a hinge structure (e.g., the hinge structure 202 in FIG. 2) connecting the first housing and the second housing, and a digitizer assembly (e.g., the digitizer assembly 300 in FIG. 6) positioned under the display. The digitizer assembly may include a digitizer (e.g., the digitizer 310 in FIG. 6) including a first digitizer (e.g., the first digitizer 311 in FIG. 6) positioned under at least a portion of the first display area and a second digitizer (e.g., the second digitizer 312 in FIG. 6) positioned under at least a portion of the second display area, a shielding layer (e.g., the shielding layer 320 in FIG. 6) including a first shielding layer (e.g., the first shielding layer 321 in FIG. 6) positioned under the first digitizer, a second shielding layer (e.g., the second shielding layer 322 in FIG. 6) positioned under the second housing, and a folding shielding layer (e.g., the folding shielding layer 323 in FIG. 6) positioned between the first shielding layer and the second shielding layer and including multiple metal patterns (e.g., the metal patterns 330 in FIG. 6), a polymer layer (e.g., the polymer layer 340 in FIG. 6) positioned under the folding shielding layer, an adhesive layer (e.g., the adhesive layer 350 in FIG. 6) including a first adhesive layer (e.g., the first adhesive layer 351 in FIG. 6) connecting the polymer layer to the digitizer and a second adhesive layer (e.g., the second adhesive layer 352 in FIG. 6) connecting the polymer layer to the hinge structure, and a metal sheet (e.g., the metal sheet 360 in FIG. 6) including a first metal sheet (e.g., the first metal sheet 361 in FIG. 6) positioned between the first shielding layer and the first housing and a second metal sheet (e.g., the second metal sheet 362 in FIG. 6) positioned between the second shielding layer and the second housing.

According to an embodiment, at least a portion of the polymer layer and at least a portion of the adhesive layer may be surrounded by the first metal sheet and the second metal sheet.

According to an embodiment, the multiple metal patterns may include a central pattern 333, a first pattern 331 at least partially positioned between the central pattern and the first shielding layer, and a second pattern 332 at least partially positioned between the central pattern and the second shielding layer. The first pattern, the second pattern, and the central pattern may be arranged parallel to each other.

According to an embodiment, the folding shielding layer may have a permeability lower than the permeability of the first shielding layer or the permeability of the second shielding layer.

According to an embodiment, the digitizer assembly may include a waterproof coating (e.g., the waterproof coating 370 in FIG. 6) surrounding at least a portion of the folding shielding layer.

It may be apparent to a person ordinarily skilled in the technical field to which the disclosure belongs that the above-described foldable electronic device including a digitizer according to the disclosure is not limited by the above-described embodiments and drawings, and can be variously substituted, modified, and changed within the technical scope of the present invention as defined by the appended set of claims.

## Claims

1. An electronic device (101) comprising:
a housing (201) comprising a first housing (210) and a second housing (220);
a display (230) disposed on the first housing and the second housing;
a hinge structure (202) connecting the first housing and the second housing; and
a digitizer assembly (300) connected to the display,
wherein the digitizer assembly comprises:
a digitizer (310) comprising a first digitizer (311) disposed within the first housing and a second digitizer (312) disposed within the second housing;
a shielding layer (320) comprising a first shielding layer (321) disposed within the first housing, a second shielding layer (322) disposed within the second housing, and a folding shielding layer (323) disposed between the first shielding layer and the second shielding layer and comprising multiple metal patterns (330);
a polymer layer (340) configured to support the folding shielding layer; and **characterized in that** the digitizer assembly further comprises:
an adhesive layer (350) comprising a first adhesive layer (351) connecting the polymer layer to the digitizer and a second adhesive layer (352) connecting the polymer layer to the hinge structure.

2. The electronic device of claim 1, wherein the digitizer assembly comprises a metal sheet (360) comprising a first metal sheet (361) configured to support the first shielding layer and a second metal sheet (362) configured to support the second shielding layer.

3. The electronic device of claim 2, wherein the first metal sheet is disposed between the first shielding layer and the first housing, and the second metal sheet is disposed between the second shielding layer and the second housing, and
wherein at least a portion of the polymer layer and at least a portion of the adhesive layer are disposed between the first metal sheet and the second metal sheet.

4. The electronic device according to claim 2 or 3, wherein the metal sheet comprises copper, and
wherein the first housing and the second housing comprise stainless steel or aluminum.

5. The electronic device of any one of claims 1 to 4, wherein the multiple metal patterns comprise a central pattern (333), a first pattern (331) at least partially disposed between the central pattern and the first shielding layer, and a second pattern (332) at least partially disposed between the central pattern and the second shielding layer.

6. The electronic device of claim 5, wherein the central pattern has a first permeability,
wherein the first pattern has a second permeability lower than the first permeability, and
wherein the second pattern has a third permeability lower than the first permeability.

7. The electronic device according to claim 5 or 6, wherein the first pattern, the second pattern, and the central pattern are arranged parallel to each other.

8. The electronic device of any one of claims 1 to 7, wherein the first adhesive layer comprises a (1-1)^{th} adhesive layer (3511) disposed between the first shielding layer and the folding shielding layer, and a (1-2)^{th} adhesive layer (3512) disposed between the second shielding layer and the folding shielding layer.

9. The electronic device of any one of claims 1 to 8, wherein the hinge structure comprises a first plate (202a) connected to the first housing and a second plate (202b) connected to the second housing, and
wherein the second adhesive layer comprises a (2-1)^{th} adhesive layer (3521) connected to the first plate and a (2-2)^{th} adhesive layer (3522) connected to the second plate.

10. The electronic device of claim 9, wherein at least a portion of the folding shielding layer is configured to cover at least a portion of a first space (S1) disposed between the first plate and the first housing, and at least a portion of a second space (S2) disposed between the second plate and the second housing.

11. The electronic device of any one of claims 1 to 10, wherein the folding shielding layer has a permeability lower than a permeability of the first shielding layer or a permeability of the second shielding layer.

12. The electronic device of any one of claims 1 to 11, wherein the display comprises a first display area (231) disposed on the first housing, a second display area (232) disposed on the second housing, and a folding area (233) disposed between the first display area and the second display area.

13. The electronic device of claim 12, wherein the folding shielding layer faces at least a portion of the folding area.

14. The electronic device of any one of claims 1 to 13, wherein the shielding layer comprises metal magnetic powder.

15. The electronic device of any one of claims 1 to 14, wherein the digitizer assembly comprises a waterproof coating (370) surrounding at least a portion of the folding shielding layer.

## Patentansprüche

1. Elektronische Vorrichtung (101), umfassend:
ein Gehäuse (201), das ein erstes Gehäuse (210) und ein zweites Gehäuse (220) umfasst;
eine Anzeige (230), die auf dem ersten Gehäuse (210) und dem zweiten Gehäuse (220) angeordnet ist;
ein Scharniermodul (202), das das erste Gehäuse (210) und das zweite Gehäuse (220) verbindet; und
eine Digitalisiereranordnung (300), die mit der Anzeige (230) verbunden ist,
wobei die Digitalisiereranordnung (300) umfasst:
einen Digitalisierer (310), der einen ersten Digitalisierer (311), der innerhalb des ersten Gehäuses (210) angeordnet ist, und einen zweiten Digitalisierer (312), der innerhalb des zweiten Gehäuses (220) angeordnet ist, umfasst;
eine Abschirmschicht (320), die eine erste Abschirmschicht (321), die innerhalb des ersten Gehäuses (210) angeordnet ist, eine zweite Abschirmschicht (322), die innerhalb des zweiten Gehäuses (220) angeordnet ist, und eine Falt-Abschirmschicht (323), die zwischen der ersten Abschirmschicht (321) und der zweiten Abschirmschicht (322) angeordnet ist und mehrere Metallmuster (330) enthält, umfasst;
eine Polymerschicht (340), die konfiguriert ist, um die Falt-Abschirmschicht (323) zu stützen; und
**dadurch gekennzeichnet, dass** die Digitalisiereranordnung ferner umfasst:
eine Klebeschicht (350), umfassend eine erste Klebeschicht (351), die die Polymerschicht (340) mit dem Digitalisierer (310) verbindet, und eine zweite Klebeschicht (352), die die Polymerschicht (340) mit der Scharnierstruktur (202) verbindet.

2. Elektronische Vorrichtung (101) nach Anspruch 1, wobei die Digitalisiereranordnung (300) eine Metallplatte (360), die eine erste Metallplatte (361) umfasst, die konfiguriert ist, um die erste Abschirmschicht (321) zu stützen, und eine zweite Metallplatte (362), die konfiguriert ist, um die zweite Abschirmschicht (322) zu stützen, umfasst.

3. Elektronische Vorrichtung (101) nach Anspruch 2, wobei die erste Metallplatte (361) zwischen der ersten Abschirmschicht (321) und dem ersten Gehäuse (210) angeordnet ist und die zweite Metallplatte (362) zwischen der zweiten Abschirmschicht (322) und dem zweiten Gehäuse (220) angeordnet ist, und
wobei zumindest ein Abschnitt der Polymerschicht (340) und zumindest ein Abschnitt der Klebeschicht (350) zwischen der ersten Metallplatte (361) und der zweiten Metallplatte (362) angeordnet sind.

4. Elektronische Vorrichtung (101) nach Anspruch 2 oder 3, wobei die Metallplatte (360) Kupfer umfasst, und
wobei das erste Gehäuse (210) und das zweite Gehäuse (220) Edelstahl oder Aluminium umfassen.

5. Elektronische Vorrichtung (101) nach einem der Ansprüche 1 bis 4, wobei die mehreren Metallmuster (330) ein zentrales Muster (333), ein erstes Muster (331), das zumindest teilweise zwischen dem zentralen Muster und der ersten Abschirmschicht (321) angeordnet ist, und ein zweites Muster (332), das zumindest teilweise zwischen dem zentralen Muster (333) und der zweiten Abschirmschicht (322) angeordnet ist, umfassen.

6. Elektronische Vorrichtung (101) nach Anspruch 5, wobei das zentrale Muster (333) eine erste Permeabilität aufweist,
wobei das erste Muster (331) eine zweite Permeabilität aufweist, die geringer ist als die erste Permeabilität, und
wobei das zweite Muster (332) eine dritte Permeabilität aufweist, die geringer ist als die erste Permeabilität.

7. Elektronische Vorrichtung (101) nach Anspruch 5 oder 6, wobei das erste Muster (331), das zweite Muster (332) und das zentrale Muster (333) parallel zueinander angeordnet sind.

8. Elektronische Vorrichtung (101) nach einem der Ansprüche 1 bis 7, wobei die erste Klebeschicht (351) eine (1-1)-te Klebeschicht (3511), die zwischen der ersten Abschirmschicht (321) und der Falt-Abschirmschicht (323) angeordnet ist, und eine (1-2)-te Klebeschicht (3512), die zwischen der zweiten Abschirmschicht (322) und der Falt-Abschirmschicht (323) angeordnet ist, umfasst.

9. Elektronische Vorrichtung (101) nach Anspruch 1 bis 8, wobei die Scharnierstruktur (202) eine erste Platte (202a), die mit dem ersten Gehäuse (210) verbunden ist, und eine zweite Platte (202b), die mit dem zweiten Gehäuse (220) verbunden ist, umfasst, und
wobei die zweite Klebeschicht (352) eine mit der ersten Platte (202a) verbundene (2-1)-te Klebeschicht (3521) und eine mit der zweiten Platte (202b) verbundene (2-2)-te Klebeschicht (3522) umfasst.

10. Elektronische Vorrichtung (101) nach Anspruch 9, wobei zumindest ein Abschnitt der Falt-Abschirmschicht (323) konfiguriert ist, um zumindest einen Abschnitt eines ersten Raums (S1), der zwischen der ersten Platte und dem ersten Gehäuse (210) angeordnet ist, und mindestens einen Abschnitt eines zweiten Raums (S2), der zwischen der zweiten Platte und dem zweiten Gehäuse (220) angeordnet ist, abzudecken.

11. Elektronische Vorrichtung (101) nach einem der Ansprüche 1 bis 10, wobei die Falt-Abschirmschicht (323) eine Permeabilität aufweist, die geringer ist als eine Permeabilität der ersten Abschirmschicht (321) oder eine Permeabilität der zweiten Abschirmschicht (322).

12. Elektronische Vorrichtung (101) nach einem der Ansprüche 1 bis 11, wobei die Anzeige (230) einen ersten Anzeigebereich (231), der auf dem ersten Gehäuse (210) angeordnet ist, einen zweiten Anzeigebereich (232), der auf dem zweiten Gehäuse (220) angeordnet ist, und einen Faltbereich (233), der zwischen dem ersten Anzeigebereich (231) und dem zweiten Anzeigebereich (232) positioniert ist, umfasst.

13. Elektronische Vorrichtung (101) nach Anspruch 12, wobei die Falt-Abschirmschicht (323) mindestens einem Abschnitt des Faltbereichs zugewandt ist.

14. Elektronische Vorrichtung (101) nach einem der Ansprüche 1 bis 13, wobei die Abschirmschicht (320) Metallmagnetpulver enthält.

15. Elektronische Vorrichtung nach einem der Ansprüche 1 bis 14, wobei die Digitalisieranordnung (300) eine wasserdichte Beschichtung (370) umfasst, die zumindest einen Abschnitt der Falt-Abschirmschicht (323) umgibt.

## Revendications

1. Dispositif électronique (101), comprenant :
un boîtier (201) comprenant un premier boîtier (210) et un deuxième boîtier (220) ;
un affichage (230) disposé sur le premier boîtier (210) et le deuxième boîtier (220) ;
une structure de charnière (202) reliant le premier boîtier (210) et le deuxième boîtier (220) ; et
un ensemble numériseur (300) relié à l'affichage (230),
dans lequel l'ensemble numériseur (300) comprend :
un numériseur (310) comprenant un premier numériseur (311) disposé à l'intérieur du premier boîtier (210) et un deuxième numériseur (312) disposé à l'intérieur du deuxième boîtier (220) ;
une couche de blindage (320) comprenant une première couche de blindage (321) disposée à l'intérieur du premier boîtier (210), une deuxième couche de blindage (322) disposée à l'intérieur du deuxième boîtier (220), et une couche de blindage de pliage (323) disposée entre la première couche de blindage (321) et la deuxième couche de blindage (322) et comprenant plusieurs motifs métalliques (330) ;
une couche de polymère (340) configurée pour supporter la couche de blindage de pliage (323) ; et
**caractérisé en ce que** l'ensemble numériseur comprend en outre :
une couche adhésive (350) comprenant une première couche adhésive (351) reliant la couche de polymère (340) au numériseur (310) et une deuxième couche adhésive (352) reliant la couche de polymère (340) à la structure de charnière (202).

2. Dispositif électronique (101) selon la revendication 1, dans lequel l'ensemble numériseur (300) comprend une plaque métallique (360) comprenant une première plaque métallique (361) configurée pour supporter la première couche de blindage (321) et une deuxième plaque métallique (362) configurée pour supporter la deuxième couche de blindage (322).

3. Dispositif électronique (101) selon la revendication 2, dans lequel la première plaque métallique (361) est disposée entre la première couche de blindage (321) et le premier boîtier (210), et la deuxième plaque métallique (362) est disposée entre la deuxième couche de blindage (322) et le deuxième boîtier (220), et
dans lequel au moins une partie de la couche de polymère (340) et au moins une partie de la couche adhésive (350) sont disposées entre la première plaque métallique (361) et la deuxième plaque métallique (362).

4. Dispositif électronique (101) selon la revendication 2 ou 3, dans lequel la plaque métallique (360) comprend du cuivre, et
dans lequel le premier boîtier (210) et le deuxième boîtier (220) comprennent de l'acier inoxydable ou de l'aluminium.

5. Dispositif électronique (101) selon l'une quelconque des revendications 1 à 4, dans lequel les multiples motifs métalliques (330) comprennent un motif central (333), un premier motif (331) disposé au moins partiellement entre le motif central et la première couche de blindage (321), et un deuxième motif (332) disposé au moins partiellement entre le motif central (333) et la deuxième couche de blindage (322).

6. Dispositif électronique (101) selon la revendication 5, dans lequel le motif central (333) présente une première perméabilité,
dans lequel le premier motif (331) présente une deuxième perméabilité inférieure à la première perméabilité, et
dans lequel le deuxième motif (332) présente une troisième perméabilité inférieure à la première perméabilité.

7. Dispositif électronique (101) selon la revendication 5 ou 6, dans lequel le premier motif (331), le deuxième motif (332) et le motif central (333) sont disposés parallèlement les uns aux autres.

8. Dispositif électronique (101) selon l'une quelconque des revendications 1 à 7, dans lequel la première couche adhésive (351) comprend une (1-1)ème couche adhésive (3511) disposée entre la première couche de blindage (321) et la couche de blindage de pliage (323), et une (1-2)ème couche adhésive (3512) disposée entre la deuxième couche de blindage (322) et la couche de blindage de pliage (323).

9. Dispositif électronique (101) selon l'une quelconque des revendications 1 à 8, dans lequel la structure de charnière (202) comprend une première plaque (202a) reliée au premier boîtier (210) et une deuxième plaque (202b) reliée au deuxième boîtier (220), et
dans lequel la deuxième couche adhésive (352) comprend une (2-1)ème couche adhésive (3521) reliée à la première plaque (202a) et une (2-2)ème couche adhésive (3522) reliée à la deuxième plaque (202b).

10. Dispositif électronique (101) selon la revendication 9, dans lequel au moins une partie de la couche de blindage de pliage (323) est configurée pour recouvrir au moins une partie d'un premier espace (S1) situé entre la première plaque et le premier boîtier (210), et au moins une partie d'un deuxième espace (S2) situé entre la deuxième plaque et le deuxième boîtier (220).

11. Dispositif électronique (101) selon l'une quelconque des revendications 1 à 10, dans lequel la couche de blindage de pliage (323) présente une perméabilité inférieure à une perméabilité de la première couche de blindage (321) ou à une perméabilité de la deuxième couche de blindage (322).

12. Dispositif électronique (101) selon l'une quelconque des revendications 1 à 11, dans lequel l'affichage (230) comprend une première zone d'affichage (231) disposée sur le premier boîtier (210), une deuxième zone d'affichage (232) disposée sur le deuxième boîtier (220), et une zone de pliage (233) disposée entre la première zone d'affichage (231) et la deuxième zone d'affichage (232).

13. Dispositif électronique (101) selon la revendication 12, dans lequel la couche de blindage de pliage (323) fait face à au moins une partie de la zone de pliage.

14. Dispositif électronique (101) selon l'une quelconque des revendications 1 à 13, dans lequel la couche de blindage (320) comprend de la poudre métallique magnétique.

15. Dispositif électronique selon l'une quelconque des revendications 1 à 14, dans lequel l'ensemble numériseur (300) comprend un revêtement étanche (370) entourant au moins une partie de la couche de blindage de pliage (323).
